# EUROPEAN PATENT APPLICATION

(11) **EP 4 467 848 A1**
(43) Date of publication of application: **27.11.2024**
(21) Application number: 23175644.6
(22) Date of filing: 26.05.2023
(51) Int. Cl.: F16H 61/30

(54) **PNEUMATIC VALVE, PNEUMATIC SYSTEM AND VEHICLE, IN PARTICULAR UTILITY VEHICLE**

(71) Applicant: ZF CV Systems Europe BV, 1170 Brüssel (BE)
(72) Inventor: KASZUBA, Damian, 50-504 Wroclaw (PL); Marciniak, Lubomir, 50-504 Wroclaw (PL)
(74) Representative: Ohlendorf, Henrike

(57) **Abstract**

Pneumatic valve (100) for a pneumatic system (250) of a vehicle (200a), in particular utility vehicle (200b), wherein the pneumatic valve (100) comprises a cylinder (110) and a main piston (120) arranged within the cylinder (110), the cylinder (110) comprises an end face (113) with an air distribution channel (130) being connected to an air inlet (135) and being adapted to deliver pressurized air to move the main piston (120) within the cylinder (110), and the air distribution channel (130) is adapted to deliver pressurized air to an inner section (121) and to an outer section (111) being arranged radially outwardly from the inner section (121) and between the main piston (120) and the end face (113), wherein the air distribution channel (130) is adapted to deliver pressurized air to the inner section (121) and to the outer section (111) alternatingly.

## Description

The disclosure relates to a pneumatic valve for a pneumatic system of a vehicle, in particular utility vehicle, wherein the pneumatic valve comprises a cylinder and a main piston arranged within the cylinder, the cylinder comprises an end face with an air distribution channel being connected to an air inlet and being adapted to deliver pressurized air to move the main piston within the cylinder. The disclosure further relates to a pneumatic system for a vehicle, in particular utility vehicle, comprising a pneumatic valve, and to a vehicle, in particular utility vehicle, comprising a pneumatic system.

Pneumatic valves are known in the prior art. Pneumatic valves may be controlled by the application of pressurized air. The application of pressurized air may lead to a deflection of one or more pistons. The deflection of the one or more pistons may be reciprocated by a stroke of an actuator. The actuator may actuate a component in a pneumatic system and/or change a state thereof.

When the actuator stroke is beginning from an end position air needs to be delivered into a space between the piston and the end face of the cylinder. Such an end position may be a position in which a piston is too close to and/or even contacting the end face of the cylinder, e.g., a fully extended position or, if the valve comprises an auxiliary piston, a partly extended position at which the main piston contacts the end face.This may cause, upon the application of pressurized air, a non-uniform air distribution between the piston and the end face. The non-uniform air distribution may result in uneven force acting on the piston for deflecting the piston at the very beginning of the stroke of the actuator. This may cause sideways loads, i.e., forces between a lateral face of the piston and a lateral face of the cylinder, resulting in increased friction between the piston and the cylinder. In consequence, the non-uniform air distribution may lead to a delayed reaction of the actuator and/or to an improvable performance.

To avoid the above, it is known from the prior art to provide a volume between the piston and the cylinder bottom, even in an end stop position of the actuator and/or of the piston. However, the so-called dead volume slows down the actuator reaction to pressure input, since pressurized air fills the dead volume and then deflects to piston. As a result, the design is usually a compromise to leave as little dead volume as possible but still enough volume between the piston and the end face to ensure a proper air distribution.

The above is even more pronounced for pneumatic valves as so-called three-position actuators. Such a three-position actuator usually comprises one or more auxiliary pistons which increase the complexity of the valve and the vulnerability to an uneven air distribution that may cause tilting or other misbehaviors.

The problem of the disclosure is to provide a technological contribution to the art. An embodiment of the present disclosure may solve the problem of enabling an even air distribution between a piston and an end face of a pneumatic valve, while avoiding introducing a large amount of dead volume between the piston and the end face.

The object is solved by the subject-matter according to independent claim 1 and according to the remaining independent claims. Dependent claims relate to preferred embodiments.

According to an aspect of the disclosure, a pneumatic valve for a pneumatic system of a vehicle, in particular utility vehicle, is provided. Therein, the pneumatic valve comprises a cylinder and a main piston arranged within the cylinder, the cylinder comprises an end face with an air distribution channel being connected to an air inlet and being adapted to deliver pressurized air to move the main piston within the cylinder, and the air distribution channel is adapted to deliver pressurized air to an inner section and to an outer section being arranged radially outwardly from the inner section and between the main piston and the end face, wherein the air distribution channel is adapted to deliver pressurized air to the inner section and to the outer section alternatingly.

The cylinder may be adapted to be deflected, i.e., to move along an axis, within the cylinder under the application of the pressurized air. The axis may be defined as a respective cylinder axis of the cylinder and/or the piston. The arrangement of the inner section and of the outer section may be, in a radial direction, defined by the axis. I.e., the inner section may be arranged between the axis and the outer section. In the axial direction, the inner section and the outer section is arranged between the main piston and the end face. This enables that, in an end stop position, pressurized air may be delivered between the main piston and the end face to deflect the main piston.

When pressurized air is applied the air distribution channel may be considered as a route of least resistance for the pressurized air. Thus, pressurized air may be distributed within the air distribution channel upon the application of the pressurized air. The air distribution channel is decisive for the onset of the deflection of the main piston. The alternating air distribution channel may provide uniform air distribution underneath the piston of the pneumatic actuator, i.e., between the end face and the piston, at the beginning of the stroke starting from an end position, even if the cylinder bottom acts as a hard end stop.

To provide as little dead volume as possible and the achieve an even distribution of pressurized air, the air distribution channel is adapted to deliver pressurized air to the inner section and to the outer section alternatingly. The alternating delivery of pressurized air to the inner section and to the outer section avoids that the air distribution channel delivers pressurized air to a connected and circumferential volume between the main piston and the end face which spans along its circumference from an inner diameter to an outer diameter. This reduces the volume of the air distribution channel and may thus improve the performance of the pneumatic valve.

Optionally, the air distribution channel is alternatingly arranged between an inner diameter and an outer diameter of the cylinder. Thus, the air distribution channel is adapted to deliver pressurized air to the inner diameter and to the outer diameter alternatingly. I.e., along a contour of the air distribution channel, the air distribution channel extends to the inner diameter but not to the outer diameter, then to the outer diameter but not to the inner diameter, and so forth. This may reduce the dead volume compared to an air distribution channel extending between the inner and the outer diameter along a circumference, i.e., the contour of the air distribution channel.

Optionally, the air distribution channel comprises a zig-zag-shaped, a meandering and/or undulated contour. Each of the zig-zag-shaped, the meandering and/or the undulated contour may enable the air distribution channel to deliver pressurized air to the inner section and to the outer section alternatingly. This achieves a proper air distribution while avoiding unnecessary dead volume. Therein, the zig-zag-shaped, the meandering and/or the undulated contour may define a radial extension and/or arrangement of the air distribution channel in dependence on a circumferential coordinate.

Optionally, the cylinder defines an axis and the air distribution channel is partially or entirely circumferentially arranged at the end face. A circumferential arrangement of the air distribution channel achieves a homogeneous application of pressurized air. However, this may also be essentially achieved with a partial circumferential arrangement of the air distribution channel. The partial circumferential arrangement may result from ribs being arranged at the end face which may, e.g., project into the channel. Such ribs could improve the manufacture of the cylinder but may not be necessary for the functioning of air distribution channel.

Optionally, the air distribution channel comprises a plurality of delivery sections, and the air distribution channel is adapted to deliver pressurized air to each of the inner section and to the outer section at one of the plurality of delivery sections. Therein, the air distribution channel comprises dedicated delivery section to apply pressurized air. The delivery section may be defined by radially inner sections of the air distribution channel to deliver pressurized air to the inner sections and radially outer sections of the air distribution channel to deliver pressurized air to the outer sections.

Optionally, the pneumatic valve comprises an auxiliary piston being arranged radially outwardly from the main piston, and the outer section is adapted to deliver pressurized air to the auxiliary piston. In particular, the outer section may be adapted to deliver pressurized air between the auxiliary piston and the end face. This may be an efficient embodiment of pneumatic valve with the plurality of pistons, wherein homogeneous distribution of air is provided. For the same reason, optionally, the pneumatic valve is a three-position actuator.

Optionally, the end face comprises a connecting portion adapted to interconnect the air distribution channel and the air inlet, and the connecting portion comprises a larger radial extension than the air distribution channel. The connecting portion may enable a more efficient manufacturing, e.g., by milling. For this reason, the connecting portion may be convex and curved, e.g., round and/or oval. The cross-section of the air distribution channel may differ from the cross-section and/or shape of the connecting portion. E.g., the cross-section of the air distribution channel may be U-shaped and/or V-shaped.

According to an aspect of the disclosure, a pneumatic system for a vehicle, in particular utility vehicle, is provided. The pneumatic system comprises the pneumatic valve as described above. Optionally, the pneumatic valve comprises one or more of the above-described optional features to achieve a corresponding technical effect.

Optionally, the pneumatic system is an automated manual transmission. This may be a particular useful application for such a valve. The automated manual transmission may advantageously benefit from the improved performance of the pneumatic valve. In other embodiments, the pneumatic valve may be used in other pneumatic systems, such as a pneumatic suspension system and/or a pneumatic braking system.

According to an aspect of the disclosure, a vehicle, in particular utility vehicle, is provided. The vehicle, in particular utility vehicle, comprises the pneumatic system as described above. Optionally, the pneumatic system and/or the pneumatic valve of the pneumatic system comprises one or more of the above-described optional features to achieve a corresponding technical effect.

Further technical features and their technical effects are disclosed in the figures and the description thereof.

The figures show embodiments as follows:
- Fig. 1: a schematic of a vehicle, in particular utility vehicle, according to an embodiment of the disclosure;
- Fig. 2: a cross-sectional view of a pneumatic valve according to the prior art;
- Fig. 3: a cross-sectional view of a pneumatic valve and a perspective sectional view of a cylinder of a pneumatic valve according to the prior art;
- Fig. 4: a sectional view and a perspective view of details of a pneumatic valve according to an embodiment of the disclosure; and
- Fig. 5: a cross-sectional view of details of a cylinder of a pneumatic valve according to an embodiment of the disclosure.

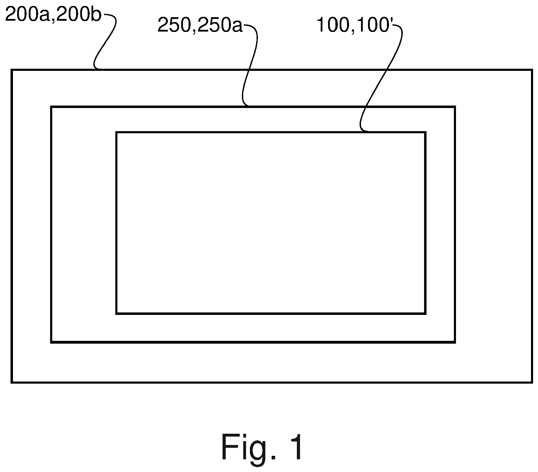

Figure 1 shows a schematic of a vehicle 200a, in particular utility vehicle 200b, according to an embodiment of the disclosure. In the following, the vehicle 200a, in particular utility vehicle 200b, is referred to as vehicle 200a, 200b. The vehicle 200a, 200b is a land-vehicle. The vehicle 200a, 200b may be a truck, a bus and/or a trailer.

The vehicle 200a, 200b comprises a pneumatic system 250. The pneumatic system 250 is an automated manual transmission 250a. The automated manual transmission 250a is adapted to switch gears, e.g., of an electric drive integrated into one of a plurality of axles (not shown), so called e-axles, of the vehicle 200a, 200b.

The pneumatic system 250 comprises a pneumatic valve 100. The pneumatic system 250 is adapted to supply pressurized air to the pneumatic valve 100. The pneumatic valve 100 is a three-position actuator 100'.

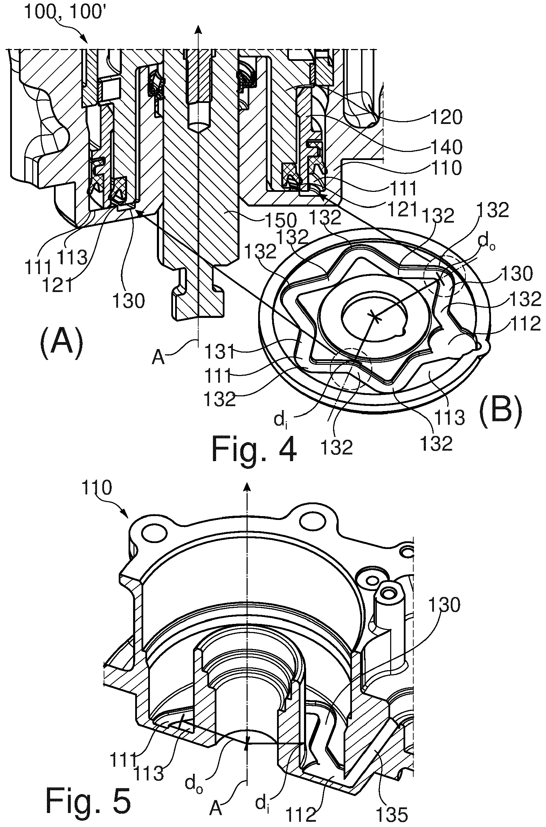

The pneumatic valve 100 is further described with reference to Figures 4 and 5.

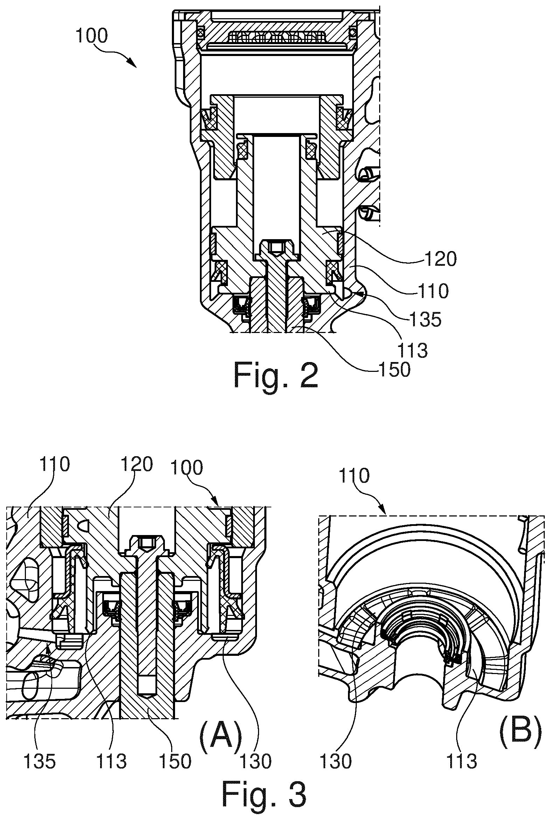

Figure 2 shows a cross-sectional view of a pneumatic valve 100 according to the prior art.

The pneumatic valve 100 comprises a cylinder 110 and a movable piston 120 within the cylinder 110. The motion of the piston 120 may imply a stroke of an actuator 150. To move the piston 120, the pneumatic valve 100 comprises an air inlet 135 via which pressurized air may be applied.

The cylinder 110 comprises an end face 113. The air inlet 135 is arranged at the end face 135 so that pressurized air may be delivered between the end face 135 and the piston 120 to deflect the piston 120.

The valve 100 is illustrated in the extended position. I.e., the piston 120 is arranged at an end stop and the actuator 150 is extended, i.e., projects maximally from the cylinder 110. The actuator 150 may be retracted when pressurized air is supplied and the piston 120 is deflected.

In the end stop position, the piston 120 contacts the end face 113. Pressurized air may inhomogeneously and non-uniformly distribution between the end face 113 and the main piston 120 which leads to risk of sticking and/or increased friction between the piston 120 and the cylinder 110.

Figure 3 shows a cross-sectional view of a pneumatic valve 100 and a perspective sectional view of a cylinder 110 of a pneumatic valve 100 according to the prior art. Therein, Figure 3 (A) shows the cross-sectional view of the pneumatic valve 100 and Figure 3 (B) shows the perspective sectional view of the cylinder 110 of the pneumatic valve 100, i.e., in Figure 3 (B) the piston 120 is schematically removed for clearer illustration.

As shown in Figure 3 (A), the pneumatic valve 100 comprises a cylinder 110 and a movable piston 120 within the cylinder 110. The motion of the piston 120 may imply a stroke of an actuator 150. To move the piston 120, the pneumatic valve 100 comprises an air inlet 135 via which pressurized air may be applied.

The cylinder 110 comprises an end face 113. The air inlet 135 is arranged at the end face 113 so that pressurized air may be delivered between the end face 113 and the piston 120 to deflect the piston 120.

The valve 100 is illustrated in the extended position. I.e., the piston 120 is arranged at an end stop and the actuator 150 is extended, i.e., projects maximally from the cylinder 110. The actuator 150 may be retracted when pressurized air is supplied and the piston 120 is deflected.

The cylinder 110 comprises an air distribution channel 130. The air distribution channel 130 is arranged at the end face 113. The air inlet 135 is adapted to deliver pressurized air in the air distribution channel 130.

As illustrated in Figure 3 (B), the air distribution channel 130 is circumferentially arranged at the end face of the cylinder 110. The air distribution channel 130 extends from an inner diameter (not indicated) to an outer diameter (not indicated) so that a to a connected and circumferential volume between the piston 120 and the end face 113 which spans along its circumference from the inner diameter to the outer diameter is provided. The simple air distribution channel 130 leads to a comparatively large dead volume, i.e., the volume of the air distribution channel 130, which may impede the performance of the valve 100.

Figure 4 shows a sectional view and a perspective view of details of a pneumatic valve 100 according to an embodiment of the disclosure. The pneumatic valve 100 is a pneumatic valve 100 for a pneumatic system 250 of a vehicle 200a, 200b. Such a vehicle 200a, 200b and pneumatic system 250 is described with reference to Figure 1. Figure 4 is described under reference to Figure 1. Therein, Figure 4 (A) shows the sectional view of the pneumatic valve 100 and Figure 4 (B) shows perspective view of details of a pneumatic valve 100, in particular of an end face 113 and an air distribution channel 130. The relation between Figures 4 (A) and (B) is schematically indicated by two arrows between Figures 4 (A) and (B).

In Figure 4 (A), the pneumatic valve 100 is a three-position actuator 100'. I.e., the pneumatic valve 100 comprises an actuator 150, e.g., a push rod, which may be deflected in one of three positions by the application of pressurized air.

The pneumatic valve 100 comprises a cylinder 110. The cylinder 110 is also called body of the pneumatic valve 100 and/or being comprised by the body.

The pneumatic valve 100 comprises a main piston 120 and an auxiliary piston 140, each arranged within the cylinder 110. Each of the cylinder 110, the main piston 120 and the auxiliary piston 140 defines an axis A. The auxiliary piston 140 is arranged radially outwardly from the main piston 120. Each of the main piston 120 and the auxiliary piston 140 is adapted to move in an axial direction along the axis A. The movement of the main piston 120 and the auxiliary piston 140 reciprocates to the deflection of the actuator 150.

The cylinder 110 comprises an end face 113 with an air distribution channel 130 being connected to an air inlet 135 (see Figure 5) and being adapted to deliver pressurized air to move the main piston 120 and/or the auxiliary piston 140 within the cylinder 110.

Within the cylinder 110, an inner section 121 and an outer section 131 is defined. The inner section 121 is radially inwardly arranged from the outer section 131. Each of the inner section 121 and the outer section 131 is arranged, in the axial direction, between the main piston 120 and the end face 113. The air distribution channel 130 is adapted to deliver pressurized air to the inner section 121 and to the outer section 111, see also Figure 4 (B).

As shown in Figure 4 (B), the air distribution channel 130 is adapted to deliver pressurized air to the inner section 121 and to the outer section 111 alternatingly. The air distribution channel 130 comprises a plurality of delivery sections 132, and the air distribution channel 130 is adapted to deliver pressurized air to each of the inner section 121 and to the outer section 111 at one of the plurality of delivery sections 132. I.e., each of the delivery sections 132 is arranged, in radial direction, at the inner section 121 or at the outer section 111.

The cylinder 110 and/or the end face 113 defines a diameter, as a radial extension. In particular, the cylinder 110 defines an inner diameter dᵢ and an outer diameter dₒ. The inner diameter dᵢ coincides, in radial direction, with the arrangement of the main piston 120. The outer diameter dₒ coincides, in radial direction, with the arrangement of the auxiliary piston 140. The air distribution channel 130 is alternatingly arranged between the inner diameter dᵢ and the outer diameter dₒ of the cylinder 110.

The air distribution channel 130 comprises a zig-zag-shaped contour 131. In other embodiments (not shown), the air distribution channel 130 comprises a meandering, i.e., a line with repeated sections, and/or undulated contour 131, e.g., sinusoidal.

In other words, the alternating shape of the air distribution channel 130 may be described as follows: every second of the delivery sections 132 is arranged at the outer diameter dₒ an forms an outer kink of the zig-zagged air distribution channel 130 and is adapted to deliver air via the outer section 111 of the main 120 piston and to the auxiliary piston 140; every other second of the delivery sections 132 is arranged at the inner diameter dᵢ and forms an inner kink of the zig-zagged air distribution channel 130 and is adapted to deliver air via the inner section 121 to the main piston 120.

The air distribution channel 130 is circumferentially arranged at the end face 113. In another embodiment (not shown), the air distribution channel 130 is partially circumferentially arranged at the end face 113.

The air distribution channel 130 forms a groove in the end face 113, i.e., the cylinder bottom wall, and reaches both outer diameters dₒ and inner diameters dᵢ. In case of a three-position actuator with the auxiliary piston 140 the outer diameter do reaches both the main piston 120 and the auxiliary piston 140. The default shape of the air distribution channel 130 is a "zig-zag" or "star", but other shapes are possible. The air distribution channel 130 achieves a proper distribution of air underneath the pistons 120, 140 in the end position while introducing minimal amount of dead volume.

Figure 5 shows a cross-sectional view of details of a cylinder 110 of a pneumatic valve 100 according to an embodiment of the disclosure. The cylinder 110 as shown in Figure 5 is the cylinder 110 is shown in Figure 4. Figure 5 is described under reference to Figure 4.

The cylinder 110 comprises an end face 113 with an air distribution channel 130 being connected to an air inlet 135 (see Figure 5) and being adapted to deliver pressurized air to move the main piston 120 and the auxiliary piston 140 within the cylinder 110.

The end face 113 comprises a connecting portion 112 adapted to interconnect the air distribution channel 130 and the air inlet 135. The connecting portion 112 comprises a larger radial extension than the air distribution channel 130. The connecting portion 112 is a section of the end face 113 at which pressurized air is delivered and from which the pressurized air is distributed via the air distribution channel 130. The connecting portion 112 may have a flat base and a oval cross-section.

### List of reference signs (Part of the description)

- 100: pneumatic valve
- 100': three-position actuator
- 110: cylinder
- 111: outer section
- 112: connecting portion
- 113: end face
- 120: main piston
- 121: inner section
- 130: air distribution channel
- 131: contour
- 132: delivery section
- 135: air inlet
- 140: auxiliary piston
- 150: actuator

- 200a: vehicle
- 200b: utility vehicle
- 250: pneumatic system
- 250a: automated manual transmission

- A: axis
- dᵢ: inner diameter
- dₒ: outer diameter

## Claims

1. Pneumatic valve (100) for a pneumatic system (250) of a vehicle (200a), in particular utility vehicle (200b), wherein
- the pneumatic valve (100) comprises a cylinder (110) and a main piston (120) arranged within the cylinder (110),
- the cylinder (110) comprises an end face (113) with an air distribution channel (130) being connected to an air inlet (135) and being adapted to deliver pressurized air to move the main piston (120) within the cylinder (110), and
- the air distribution channel (130) is adapted to deliver pressurized air to an inner section (121) and to an outer section (111) being arranged radially outwardly from the inner section (121) and between the main piston (120) and the end face (113), wherein
- the air distribution channel (130) is adapted to deliver pressurized air to the inner section (121) and to the outer section (111) alternatingly.

2. Pneumatic valve (100) as claimed in claim 1, wherein the air distribution channel (130) is alternatingly arranged between an inner diameter (di) and an outer diameter (dₒ) of the cylinder (110).

3. Pneumatic valve (100) as claimed in claim 1 or 2, wherein the air distribution channel (130) comprises a zig-zag-shaped, a meandering and/or undulated contour (131).

4. Pneumatic valve (100) as claimed in any one of the preceding claims, wherein the cylinder (110) defines an axis (A) and the air distribution channel (130) is partially or entirely circumferentially arranged at the end face (113).

5. Pneumatic valve (100) as claimed in any one of the preceding claims, wherein the air distribution channel (130) comprises a plurality of delivery sections (132), and the air distribution channel (130) is adapted to deliver pressurized air to each of the inner section (121) and to the outer section (111) at one of the plurality of delivery sections (132).

6. Pneumatic valve (100) as claimed in any one of the preceding claims, wherein
- the pneumatic valve (100) comprises an auxiliary piston (140) being arranged radially outwardly from the main piston (120), and
- the outer section (111) is adapted to deliver pressurized air to the auxiliary piston (140).

7. Pneumatic valve (100) as claimed in any one of the preceding claims, wherein the pneumatic valve (100) is a three-position actuator (100').

8. Pneumatic valve (100) as claimed in any one of the preceding claims, wherein
- the end face (113) comprises a connecting portion (112) adapted to interconnect the air distribution channel (130) and the air inlet (135), and
- the connecting portion (112) comprises a larger radial extension than the air distribution channel (130).

9. Pneumatic system (250) for a vehicle (200a), in particular utility vehicle (200b), comprising the pneumatic valve (100) as claimed in any one of the preceding claims.

10. Pneumatic system (250) as claimed in claim 9, wherein the pneumatic system (250) is an automated manual transmission (250a).

11. Vehicle (200a), in particular utility vehicle (200b), comprising the pneumatic system (250) as claimed in claim 9 or 10.
